# EUROPEAN PATENT APPLICATION

(11) **EP 1 375 582 A2**
(43) Date of publication of application: **02.01.2004**
(21) Application number: 03013446.4
(22) Date of filing: 23.06.2003
(51) Int. Cl.: C08K 5/527

(54) **Nucleating agent and crystalline polymer composition containing the same**

(30) Priority: 24.06.2002 JP 2002182454; 08.05.2003 JP 2003130274
(71) Applicant: Asahi Denka Co., Ltd., Tokyo (JP)
(72) Inventor: Kawamoto, Naoshi, Minami-ku, Saitama-shi, Saitama (JP); Tobita, Etsuo, Minami-ku, Saitama-shi, Saitama (JP); Urushihara, Tsuyoshi, Minami-ku, Saitama-shi, Saitama (JP)
(74) Representative: Forstmeyer, Dietmar, Dr. rer. nat., Dipl.-Chem.

(57) **Abstract**

A nucleating agent which comprises a compound represented by formula (I): 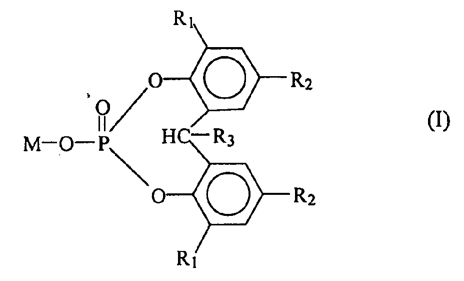 wherein R₁ and R₂ each represent an alkyl group having 1 to 9 carbon atoms; R₃ represent a hydrogen atom or an alkyl group having 1 to 4 carbon atoms; and M represents an alkali metal,
has an average particle size of 10 µm or smaller, and shows substantially no crystalline peaks in X-ray diffractometry.

## Description

### FIELD OF THE INVENTION

The present invention relates to a phosphoric ester metal salt nucleating agent which is easily dispersible in a crystalline polymer and effective in improving transparency and mechanical strength of the crystalline polymer. More particularly, it relates to a nucleating agent having a specific chemical structure and a specific average particle size and showing substantially no crystalline peaks in X-ray diffractometry (XRD). The present invention also relates to a crystalline polymer composition containing the nucleating agent.

### BACKGROUND OF THE INVENTION

Crystalline polymers including polyolefins, e.g., polyethylene, polypropylene and polybutene-1, polyesters, e.g., polyethylene terephthalate, and polyamides have a low rate of crystallization after heat molding, which gives rise to the problem that the molding cycle takes time. Besides, molded parts of these crystalline polymers can undergo deformation due to post-molding crystallization. Furthermore, because these crystalline polymers generate large crystals on heat molding, the resulting molded part has drawbacks such as insufficient strength or poor transparency.

It is known that these drawbacks of crystalline polymers, being attributed to their crystallinity, are eliminated by causing fine crystals to generate rapidly. Techniques for causing fine crystals to generate rapidly include raising a crystallizing temperature and/or adding a nucleating agent, a crystallization accelerator, etc.

Useful nucleating agents or crystallization accelerators include metal carboxylates, such as sodium benzoate, aluminum 4-tert-butylbenzoate, and sodium adipate; phosphoric ester metal salts, such as sodium bis(4-tert-butylphenyl) phosphate and sodium 2,2'-methylenebis(4,6-di-tert-butylphenyl) phosphate; and polyhydric alcohol derivatives, such as dibenzylidene sorbitol, bis(methylbenzylidene) sorbitol, and bis(dimethylbenzylidene) sorbitol. Their applications are described in JP-A-58-1736, JP-A-59-184252, JP-A-6-340786, JP-A-7-11075, JP-A-7-48473, JP-A-8-3364, JP-A-9-118776, JP-A-10-25295, and WO99/18108. Japanese Patents 3046428 and 3058487, JP-A-5-43746, JP-A-8-134260, and JP-A-8-120116 teach a combined use of a phosphoric ester metal salt nucleating agent and an aliphatic organic acid metal salt. However, this nucleating agent is not so effective as expected due to insufficient compatibility with, or dispersibility in, crystalline polymers. JP-A-2001-59040 reports a nucleating agent comprising a phosphoric ester metal salt having an average particle length of 10 µm or smaller with an average aspect ratio of 10 or smaller and a bulk specific gravity of 0.1 or greater. When added to a crystalline polymer, this nucleating agent brings about improvement on transparency and mechanical strength, but is still unsatisfactory.

### SUMMARY OF THE INVENTION

An object of the present invention is to provide a nucleating agent excellent in dispersibility in a crystalline polymer and effective in improving transparency and mechanical strength of the crystalline polymer.
Another object of the present invention is to provide a crystalline polymer composition containing the nucleating agent.

As a result of extensive investigations, the present inventors have found that the above objects of the invention are accomplished by a nucleating agent having a specific average particle size and showing substantially no crystalline peaks in XRD and thus reached the present invention.

The present invention provides a nucleating agent which comprises a compound represented by formula (I): 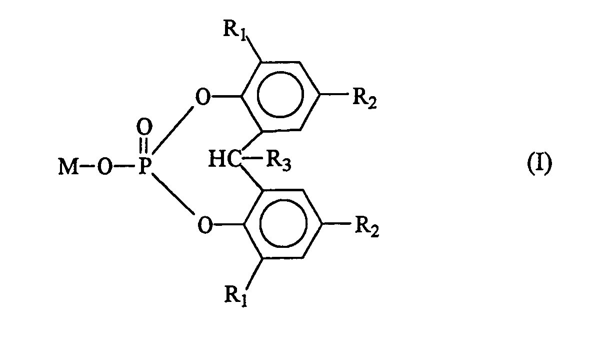 wherein R₁ and R₂ each represent an alkyl group having 1 to 9
carbon atoms; R₃ represent a hydrogen atom or an alkyl group
having 1 to 4 carbon atoms; and M represents an alkali metal,
has an average particle size of 10 µm or smaller, and shows substantially no crystalline peaks in XRD; a nucleating agent composition comprising the nucleating agent and an aliphatic organic acid metal salt; and a crystalline polymer composition containing the nucleating agent or the nucleating agent composition.

### BRIEF DESCRIPTIN OF THE DRAWINGS

The present invention will be more particularly described with reference to the accompanying drawings, in which:
Fig. 1 is an XRD pattern of the nucleating agent obtained in Example 1-1;
Fig. 2 is an XRD pattern of the nucleating agent obtained in Example 1-2;
Fig. 3 is an XRD pattern of the nucleating agent obtained in Example 1-3;
Fig. 4 is an XRD pattern of the nucleating agent composition obtained in Example 1-4;
Fig. 5 is an XRD pattern of the nucleating agent obtained in Comparative Example 1-1;
Fig. 6 is an XRD pattern of the nucleating agent obtained in Comparative Example 1-2;
Fig. 7 is an XRD pattern of the nucleating agent obtained in Comparative Example 1-3;
Fig. 8 is an XRD pattern of the nucleating agent obtained in Comparative Example 1-4;
Fig. 9 is an XRD pattern of the nucleating agent obtained in Comparative Example 1-5; and
Fig. 10 is an XRD pattern of the nucleating agent obtained in Comparative Example 1-6.

### DETAILED DESCRIPTION OF THE INVENTION

The nucleating agent according to the present invention comprises a compound represented by formula (I). In formula (I), the alkyl group having 1 to 9 carbon atoms as represented by R₁ and R₂ includes methyl, ethyl, propyl, isopropyl, butyl, sec-butyl, tert-butyl, isobutyl, amyl, tert-amyl, hexyl, heptyl, octyl, isooctyl, 2-ethylhexyl,tert-octyl, nonyl, and tert-nonyl. The alkyl group having 1 to 4 carbon atoms as represented by R₃ includes methyl, ethyl, propyl, isopropyl, butyl, sec-butyl, tert-butyl, and isobutyl.

The alkali metal as represented by M includes sodium, potassium, and lithium.

Of the compounds represented by formula (I) preferred are those in which R₁ is a tertiary alkyl group, e.g., tert-butyl or tert-amyl; R₂ is an alkyl group having 1 to 4 carbon atoms; and R₃ is a hydrogen atom or a methyl group. Compound Nos. 1 to 6 shown below are particularly preferred.

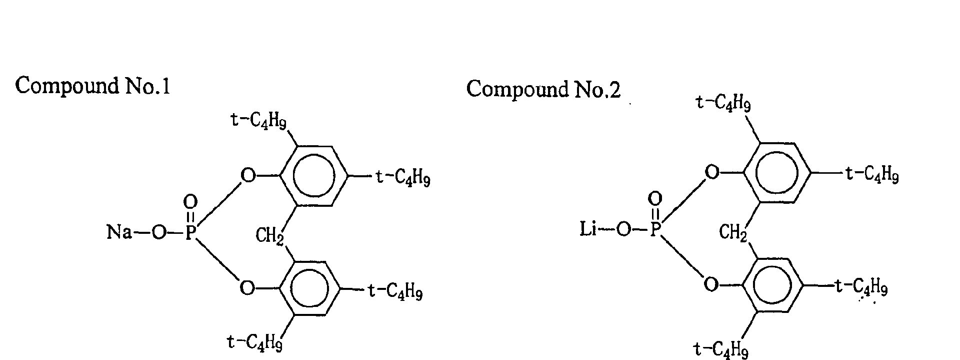

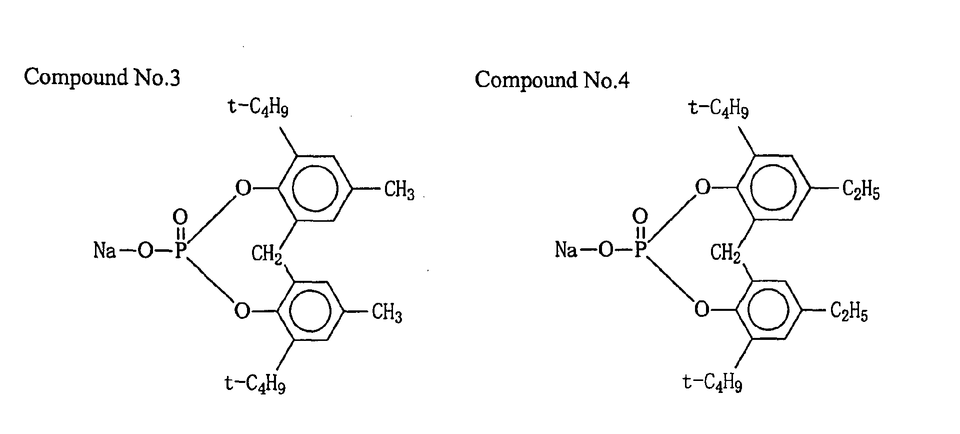

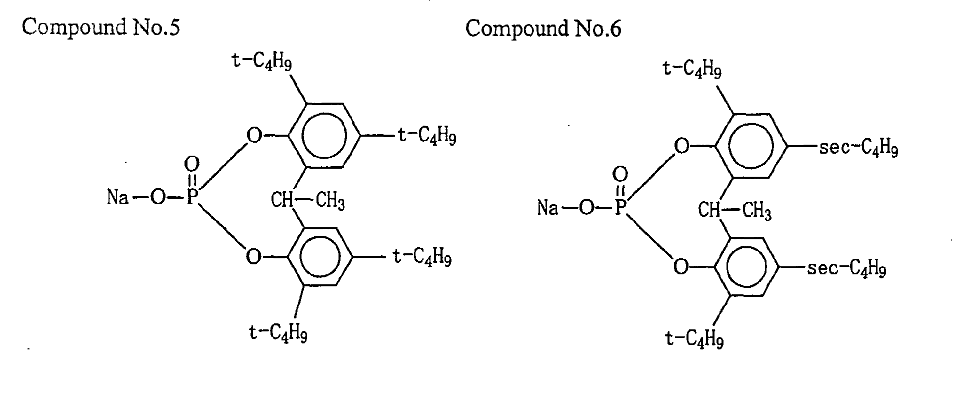

The compound of formula (I) is not limited by process of preparation. For example, it is prepared by a process including the steps of reacting phosphorus trichloride (or phosphorus oxychloride) with a 2,2'-alkylidenephenol, optionally hydrolyzing the product, to obtain a cyclic acidic phosphate, and reacting the resulting phosphate with an alkali metal hydroxide, e.g., sodium hydroxide or lithium hydroxide. The resulting compound is collected by filtration and dried to give a powder as a raw material of the nucleating agent of the present invention. For instance, compound No. 1 is obtained by reacting phosphorus oxychloride with 2,2'-methylenebis(4,6-tertbutylphenol) to form a cyclic acidic phosphoric ester and reacting the ester with sodium hydroxide. The resulting compound No. 1 is collected by filtration and dried to give powder usually having an average particle size of 50 to 80 µm. Compound No. 2 is obtained in the same manner, except for replacing sodium hydroxide used above with lithium hydroxide. The resulting compound No. 2 is collected by filtration and dried to give powder usually having an average particle size of 10 to 30 µm.

It is a practice often followed that a raw material powder of a nucleating agent is pulverized into fine particles of 10 µm or smaller so as to have improved dispersibility in a resin matrix. The nucleating agent of the present invention is obtained by applying this practice to the as-produced powder.

The average particle size of the nucleating agent according to the present invention is 10 µm or smaller, preferably 5 µm or smaller, still preferably 0.5 µm or smaller. The lower limit of the average particle size is usually, but not limited to, 0.01 µm. The terminology "average particle size" as used herein means a mass median diameter D₅₀ (an equivalent mass diameter at 50% cumulative mass).

The language "showing substantially no crystalline peaks in X-ray diffractometry (XRD)" as used herein means that an XRD pattern measured under conditions of 50 kV and 100 mA shows no sharp peaks characteristic of a crystal structure but mild peaks called a halo.

The nucleating agent of the present invention can be prepared from the above-described raw material powder by an arbitrary method, preferably by subjecting the powder to a specific treatment including a specific comminution treatment and a rapid cooling treatment from a specific high temperature.

The specific comminution treatment is described below. The nucleating agent of the present invention can be obtained by pulverizing the raw material powder under as strong a shearing force as possible to exert mechanochemical effects on the powder.

Pulverizers which can be used for comminution include mortars, ball mills, rod mils, tube mills, conical mills, vibration ball mills, high-swing ball mills, roller mills, pin mills, hammer mills, attrition mills, jet mills, jetomizers, micronizers, nanomizers, microatomizers, colloid mills, Premier colloid mills, micron mills, Charlotte colloid mills, and rotary cutters. Preferred of them are ultrafine pulverizers. One or more than one pulverizers are chosen from among them according to the kind of the powder and the like.

Commercially available pulverizers useful in the present invention include Attritor and Fine Mill from Mitsui Mining Co., Ltd.; Yusei Ball Mill from Seishin Kigyo K.K.; Super Micron Mill, Innomizer, Counter Jet Mill, Spiral Jet Mill, and Mechanofusion from Hosokawa Micron Corp.; Colloplex and Exceed Mill from Makino Mfg. Co., Ltd.; and Heiko Sample Mill TI-500ET from Heiko Seisakusyo. Attritor supplied by Mitsui Mining is particularly preferred.

The pulverization time is decided arbitrarily according to the type of the pulverizer, intensity of pulverization, the kind of the raw material, and the like. It usually ranges about 5 minutes to 50 hours, preferably about 10 minuets to 20 hours. Thus, the raw material powder is pulverized in an appropriately selected pulverizer for an appropriately selected time according to its kind to give a nucleating agent of the present invention having an average particle size of 10 µm or smaller and showing substantially no crystalline peaks in XRD.

The nucleating agent of the invention can also be prepared by a rapid cooling treatment from a specific high temperature. More specifically, the nucleating agent can be obtained by heating a compound represented by formula (I) to 400°C or higher temperatures, followed by rapid cooling in liquid nitrogen to obtain fine particles, which may be further pulverized if needed.

The crystalline polymer composition according to the present invention which comprises a crystalline polymer and the above-described nucleating agent exhibits improved transparency and enhanced mechanical strength.

Crystalline polymers which can be used in the present invention include polyolefins, such as α-olefin polymers, e.g., low-density polyethylene, linear low-density polyethylene, high-density polyethylene, isotactic polypropylene, syndiotactic polypropylene, hemi-isotactic polypropylene, stereo-block polypropylene, polybutene-1, poly-3-methyl-1-butene, poly-3-methyl-1-pentene, and poly-4-methyl-1-pentene, and α-olefin copolymers, e.g., ethylene/propylene block or random copolymers; thermoplastic linear polyesters, such as polyethylene terephthalate, polybutylene terephthalate, and polyhexamethylene terephthalate; polysulfides, such as polyphenylene sulfide; polylactic acids, such as polycaprolactone; linear polyamides, such as polyhexamethylene adipamide; and crystalline polystyrenes, such as syndiotactic polystyrene.

In particular, polyolefins enjoy pronounced effects by the nucleating agent of the present invention. Especially preferred polyolefins are polypropylene resins, including polypropylene, ethylene/propylene block or random copolymers, random or block copolymers of α-olefins other than ethylene and propylene, and polyblends of these propylene polymers with other α-olefin polymers.

The nucleating agent content in the crystalline polymer composition is not particularly limited. A preferred content is 0.005 to 10 parts by weight, particularly 0.01 to 2.5 parts by weight, per 100 parts by weight of the crystalline polymer. Amounts less than 0.005 part may fail to produce sufficient effects of addition. Amounts more than 10 parts bring about no appreciable increase of effect for the cost and can adversely affect the physical properties of molded parts obtained from the resulting crystalline polymer composition.

If desired, the crystalline polymer composition can contain other nucleating agents than that of the present invention and additives. Useful nucleating agents other than that of the present invention include carboxylic acid metal salts, such as lithium benzoate, sodium benzoate, aluminum benzoate, aluminum 4-tert-butylbenzoate, and sodium adipate; acidic phosphoric ester metal salts other than those represented by formula (I), such as sodium bis(4-tert-butylphenyl) phosphate; and polyhydric alcohol derivatives, such as dibenzylidene sorbitol, bis(methylbenzylidene) sorbitol, and bis(dimethylbenzylidene) sorbitol. The other nucleating agents can be used in an amount of 0.05 to 10 parts by weight per 100 parts by weight of the crystalline polymer.

The additives which can be used in the composition include hindered amine light stabilizers (HALSs), UV-absorbers, phosphorus antioxidants, phenol antioxidants, sulfur antioxidants, aliphatic organic acid metal salts, and others commonly employed in the art. The HALSs include compounds represented by formula (II) shown below, cyanuric chloride-condensed HALSs, and polymeric HALSs. 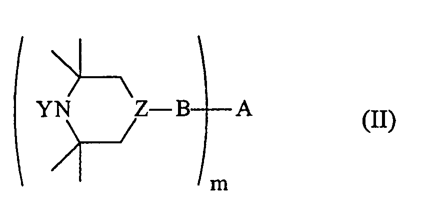 wherein m represents an integer of 1 to 6; A represents a hydrogen
atom, an m-valent hydrocarbon group having 1 to 18 carbon atoms,
an m-valent acyl group, or an m-valent carbamoyl group; B
represents an oxygen atom, -NH- or -NRe- (wherein Re represents
an alkyl group having 1 to 8 carbon atoms); Y represents a
hydrogen atom, an oxygen radical (·O), an alkoxy group having 1
to 18 carbon atoms, an alkyl group having 1 to 8 carbon atoms or a
hydroxyl group; and Z represents a methine group or a group of
formula (III): 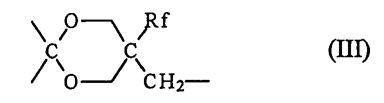 (wherein Rf represents an alkyl group having 1 to 8 carbon atoms).

In formula (II), the m-valent hydrocarbon group having 1 to 18 carbon atoms as represented by A includes alkyl groups and alkane(di- to hexa)yl groups derived from hydrocarbons, such as methane, ethane, propane, butane, sec-butane, isobutane, tret-butane, pentane, isopentane, tert-pentane, hexane, cyclohexane, heptane, isoheptane, tert-heptane, n-octane, isooctane, tert-octane, 2-ethylhexane, nonane, isononane, decane, dodecane, tridecane, tetradecane, pentadecane, hexadecane, heptadecane, and octadecane.

The m-valent acyl group as represented by A includes one derived from a monocarboxylic acid, one derived from a polycarboxylic acid having two to six carboxyl groups, and one derived from an alkyl ester of a polycarboxylic acid with m carboxyl group(s) remaining unesterified. The monocarboxylic acid, the polycarboxylic acid and the polycarboxylic acid alkyl esters will hereinafter be referred inclusively to "acyl-providing compounds". Examples of the acyl-providing compounds are acetic acid, benzoic acid, 4-trifluoromethylbenzoic acid, salicylic acid, acrylic aid, methacrylic acid, oxalic acid, malonic acid, succinic acid, glutaric acid, adipic acid, pimelic acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, dimer acid, phthalic acid, terephthalic acid, isophthalic acid, naphthalenedicarboxylic acid, cyclohexanedicarboxylic acid, trimellitic acid, trimesic acid, propane-1,2,3-tricarboxylic acid, propane-1,2,3-tricarboxylic acid monoor dialkyl esters, pentane-1,3,5-tricarboxylic acid, pentane-1,3,5-tricarboxylic acid mono- or dialkyl esters, butane-1,2,3,4-tetracarboxylic acid, butane-1,2,3,4-tetracarboxylic acid mono-, di- or trialkyl esters, pentane-1,2,3,4,5-pentacarboxylic acid, pentane-1,2,3,4,5-pentacarboxylic acid mono-, di-, tri- or tetraalkyl esters, hexane-1,2,3,4,5,6-hexacarboxylic acid, and hexane-1,2,3,4,5,6-hexacarboxylic acid mono- to pentaalkyl esters.

The m-valent carbamoyl group as represented by A includes a monoalkylcarbamoyl group and a dialkylcarbamoyl group which are derived from isocyanate compounds. Isocyanate compounds providing monoalkylcarbamoyl groups include tolylene diisocyanate, diphenylmethane 4,4'-diisocyanate, p-phenylene diisocyanate, xylylene diisocyanate, 1,5-naphthylene diisocyanate, 3,3'dimethyldiphenyl 4,4'-diisocyanate, dianisidine diisocyanate, tetramethylxylylene diisocyanate, isophorone diisocyanate, dicyclohexylmethane 4,4'-diisocyanate, trans-1,4-cyclohexyl diisocyanate, norbornene diisocyanate, 1,6-hexamethylene diisocyanate, 2,2,4-(or 2,4,4-)trimethylhexamethylene diisocyanate, lysine diisocyanate, triphenylmethane triisocyanate, 1-methylbenzole 2,4,6-triisocyanate, and dimethyltriphenylmethane tetraisocyanate. Examples of the dialkylcarbamoyl groups are diethylcarbamoyl, dibutylcarbamoyl, dihexylcarbamoyl, and dioctylcarbamoyl.

The hydrocarbon group having 1 to 18 carbon atoms, the m-valent acyl group, and the m-valent carbamoyl group may be substituted with a halogen atom, a hydroxyl group, an alkyl group, an alkoxy group, a nitro group, a cyano group, etc.

In formula (II), the alkyl group having 1 to 8 carbon atoms as represented by Re possessed by B includes methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, 1-ethylpentyl, n-octyl, isooctyl, tert-octyl, and 2-ethylhexyl.

The alkoxy group having 1 to 18 carbon atoms as represented by Y includes methoxy, ethoxy, propoxy, isopropoxy, butoxy, sec-butoxy, tert-butoxy, isobutoxy, amyloxy, isoamyloxy, hexyloxy, heptyloxy, octyloxy, 2-ethylhexyloxy, nonyloxy, isononyloxy, decyloxy, dodecyloxy, tridecyloxy, tetradecyloxy, pentadecyloxy, hexadecyloxy, heptadecyloxy, and octadecyloxy. The alkyl group having 1 to 8 carbon atoms as represented by Y includes those recited above as examples of Re.

The alkyl group having 1 to 8 carbon atoms as represented by Rf possessed by Z includes those recited above as examples of Re.

Examples of the compound represented by formula (II) are 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidyl) sebacate, 1,2,2,6,6-pentamethyl-4-piperidyl methacrylate, 2,2,6,6-tetramethylpiperidyl methacrylate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl)bis(tridecyl) 1,2,3,4-butanetetracarboxylate, bis(1,2,2,6,6-pentamethyl-4-piperidyl)bis(tridecyl) 1,2,3,4-butanetetracarboxylate, bis(1,2,2,6,6-pentamethyl-4-piperidyl-2-butyl-2-(3,5 -di-tert-butyl-4-hydroxybenzyl) malonate, 3,9-bis {1,1-dimethyl-2-[tris(2,2,6,6-tetramethyl-4-piperidyloxycarbonyloxy)butylcarbonyloxy]ethyl}-2,4,8,10-tetraoxaspiro[5.5]undecane, 3,9-bis{1,1-dimethyl-2-[tris(1,2,2,6,6-pentamethyl-4-piperidyloxycarbonyloxy)butylcarbonyloxy] ethyl} -2,4,8,10-tetraoxaspiro[5.5]undecane.

Examples of the cyanuric chloride-condensed HALSs are 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-striazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(Nbutyl-N-( 1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl) amino)-striazin-6-ylamino]undecane, and 1,6,11-tris[2,4-bis(N-butyl-N-(1,2,2,6,6-pentamethyl-4-piperidyl)amino)-s-triazin-6-ylamino]undecane.

Examples of the polymeric HALSs are 1-(2-hydroxyethyl)-2,2,6,6-tetramethyl-4-piperidinol/diethyl succinate polycondensate and 1,6-bis(2,2,6,6-tetramethyl-4-piperidylamino)hexane/dibromoethane polycondensate.

The UV-absorbers which can be used in the crystalline polymer composition include 2-hydroxybenzophenones, such as 2,4-dihydroxybenzophenone, 2-hydroxy-4-methoxybenzophenone, 2-hydroxy-4-octyloxybenzophenone, and 5,5'-methylenebis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), 2-(2-hydroxy-3-tertbutyl-5-carboxyphenyl)benzotriazole polyethylene glycol ester, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryoyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3 -tert-butyl-5-(3-methacryloyoxypropyl)phenyl] -5 -chlorobenzotriazole, 2-[2-hydroxy-4-(2-methacryloyoxymethyl)phenyl]benzotriazole, 2-[2-hydroxy-4-(3-methacryloyoxy-2-hydroxypropyl)phenyl]benzotriazole, and 2-[2-hydroxy-4-(3-methacryloyoxypropyl)-phenyl]benzotriazole; 2-(2-hydroxyphenyl)-4,6-diaryl-1,3,5-triazines, such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C₁₂₋₁₃ mixed alkoxy-2-hydroxypropoxy)phenyl]-4,6-bis(2,4-dimethylphenyl)- 1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine, and 2,4,6-tris(2-hydroxy-3-methyl-4-hexyloxyphenyl)-1,3,5-triazine; benzoates, such as phenyl salicylate, resorcinol monobenzoate, 2,4-di-tert-butylphenyl 3,5-di-tert-butyl-4-hydroxybenzoate, octyl 3,5-di-tert-butyl-4-hydroxybenzoate, dodecyl 3,5-di-tert-butyl-4-hydroxybenzoate, tetradecyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, and behenyl 3,5-ditert-butyl-4-hydroxybenzoate; substituted oxalanilides, such as 2-ethyl-2'ethoxyaxalanilide and 2-ethoxy-4'-dodecylaxalanilide; cyanoacrylates, such as ethyl α-cyano-β,β-diphenylacrylate and methyl 2-cyano-3-methyl-3-(p-methoxyphenyl)-acrylate; and salts or chelates of various metals such as nickel and chromium.

Examples of the phosphorus antioxidants which can be added to the crystalline polymer composition include triphenyl phosphite, tris(2,4-di-tert-butylphenyl) phosphite, tris(2,5-di-tert-butylphenyl) phosphite, tris(nonylphenyl) phosphite, tris(dinonylphenyl) phosphite, tris(mono, di-mixed nonylphenyl) phosphite, diphenyl acid phosphite, 2,2'-methylenebis(4,6-di-tert-butylphenyl)octyl phosphite, diphenyldecyl phosphite, diphenyloctyl phosphite, di(nonylphenyl)pentaerythritol diphosphite, phenyldiisodecyl phosphite, tributyl phosphite, tris(2-ethylhexyl) phosphite, tridecyl phosphite, trilauryl phosphite, dibutyl acid phosphite, dilauryl acid phosphite, trilauryl trithiophosphite, bis(neopentyl glycol)(1,4-cyclohexanedimethyl) diphosphite, bis(2,4-di-tert-butylphenyl)pentaerythritol diphosphite, bis(2,5-di-tertbutylphenyl)pentaerythritol diphosphite, bis(2,6-di-tert-butyl-4-methylphenyl)-pentaerythritol diphosphite, bis(2,4-dicumylphenyl)pentaerythritol diphosphite, distearylpentaerythritol diphosphite, tetra(C₁₂₋₁₅ mixed alkyl)-4,4'-isopropylidenediphenyl phosphite, bis[2,2'-methylenebis(4,6-diamylphenyl)]-isopropylidenediphenyl phosphite, tetratridecyl-4,4'-butylidenebis(2-tert-butyl-5-methylphenol) diphosphite, hexa(tridecyl)[1,1,3-tris(2-methyl-5-tert-butyl-4-hydroxyphenyl)butane triphosphite, tetrakis(2,4-di-tert-butylphenyl)biphenylene diphosphite, tris{2-[(2,4,7,9-tetrakis-tertbutyldibenzo[d,f] [1,3,2]dioxaphosphepin-6-yl)oxy]ethyl} amine, 9,10-dihydro-9-oxo-10-phosphaphenanthrene-10-oxide, and 2-butyl-2-ethylpropanediol(2,4,6-tri-tertbutylphenol) monophosphite.

The phenol antioxidants which can be added to the crystalline polymer composition include 2,6-di-tert-butyl-p-cresol, 2,6-diphenyl-4-octadecyloxyphenol, stearyl (3,5-di-tert-butyl-4-hydroxyphenyl)propionate, distearyl (3,5-di-tert-butyl-4-hydroxybenzyl)phosphonate, tridecyl 3,5-di-tert-butyl-4-hydroxybenzyl thioacetate, thiodiethylenebis[(3,5-di-tert-butyl-4-hydroxyphenyl)propionate], 4,4'-thiobis(6-tertbutyl-m-cresol), 2-octylthio-4,6-di(3,5-di-tert-butyl-4-hydroxyphenoxy)-s-triazine, 2,2'methylenebis(4-methyl-6-tert-butylphenol), bis[3,3-bis(4-hydroxy-3-tert-butylphenyl)-butyric acid] glycol ester, 4,4'-butylidenebis(2,6-di-tert-butylphenol), 4,4'butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl] isocyanurate, tetrakis[methylene-3-(3',5'-di-tert-butyl-4'-hydroxyphenyl)propionate]methane, 2-tertbutyl-4-methyl-6-(2-acryloyloxy-3-tert-butyl-5-methylbenzyl)phenol, 3,9-bis[2-(3-tertbutyl-4-hydroxy-5-methylhydroxycinnamoyloxy)-1,1-dimethylethyl]-2,4,8,10-tetraoxaspiro[5.5]undecane, and triethylene glycol bis[β-(3-tert-butyl-4-hydroxy-5-methylphenyl)propionate].

The sulfur antioxidants which can be added to the crystalline polymer composition include dialkyl thiodipropionates, such as dilauryl thiodipropionate, dimyristyl thiodipropionate, myristylstearyl thiodipropionate, and distearyl thiodipropionate; and β-alkylmercaptopropionic acid polyol esters, such as pentaerythritol tetra(β-dodecylmercaptopropionate).

The aliphatic organic acid metal salts which can be added to the crystalline polymer composition include those formed between aliphatic acids, such as acetic acid, propionic acid, butyric acid, isobutyric acid, valeric acid, caproic acid, caprylic acid, 2-ethylhexanoic acid, pelargonic acid, capric acid, neodecanoic acid, undecanoic acid, lauric acid, tridecanoic acid, myristic acid, pentadecanoic acid, palmitic acid, margaric acid, stearic acid, nonadecanoic acid, arachic acid, behenic acid, lignoceric acid, cerotic acid, montanic acid, melissic acid, cis-4-decenoic acid, linderic acid, tsuzuic acid, palmitoleic acid, petroselinic acid, oleic acid, elaidic acid, vaccenic acid, linoleic acid, linoelaidic acid, γ-linolenic acid, linolenic acid, ricinoleic acid, 12-hydroxystearic acid, naphthenic acid, and abietic acid, and metals, such as lithium, sodium, potassium, magnesium, calcium, strontium, barium, zinc, and aluminum. Preferred of them are magnesium stearate, calcium stearate, and zinc stearate.

Of the above-recited nucleating agents other than those of the present invention and additives, the aliphatic acid metal salts are preferably used; for they enhance the intended effect of the nucleating agent in improving transparency of the crystalline polymer composition. A preferred amount of the aliphatic acid metal salt is 0.01 to 10 times, particularly 0.01 to 5 times, the weight of the nucleating agent of the present invention.

If desired, the crystalline polymer composition may further contain other additives, such as antistatics including cationic, anionic, nonionic or amphoteric surface active agents; flame retardants including halogen compounds, phosphoric esters, phosphoric amides, melamine compounds, melamine polyphosphates, fluorine resins, and metal oxides; lubricants including hydrocarbons, fatty acids, aliphatic alcohols, aliphatic esters, aliphatic amides, and metal soaps; heavy metal deactivators; hydrotalcite; organic carboxylic acids; colorants including dyes and pigments; processing aids such as polyolefin powders; silicic acid-based additives, such as fumed silica, fine silica powder, siliceous stone, diatomaceous earth, clay, kaolin, silica gel, calcium silicate, sericite, kaolinite, flint clay, feldspar powder, vermiculite, attapulgite, talc, mica, minnesotite, and pyrophyllite; and fillers, such as calcium carbonate.

The above-described additives can be used either individually or as a combination of two or more thereof according to necessity. The amount of each additive to be added is preferably in a range of from 0.001 to 10 parts by weight per 100 parts by weight of the crystalline polymer. Addition of less than 0.001 part may fail to produce substantial effects of addition. Addition of more than 10 parts tends to only result in increase of cost without any further enhancement of the effects intended.

These additives can be incorporated into the crystalline polymer composition through various methods. For example, they may be added separately from the nucleating agent of the present invention. They may be previously mixed with the nucleating agent of the present invention, and the mixture is mixed with the crystalline polymer. Or, the nucleating agent of the present invention is previously mixed with granulation assistants used according to necessity, such as a binder, a wax, a solvent, silica, etc., in a prescribed mixing ratio, and the mixture is granulated into a one-pack type complex additive, which is added to a crystalline polymer.

With respect to the aliphatic acid metal salt additive, it is preferred that this additive be subjected to pulverization treatment together with the compound of formula (I) when the compound of formula (I) is pulverized into fine powder having an average particle size of 10 µm or smaller and showing substantially no crystalline peaks in XRD. In this case, the resulting nucleating agent composition may sometimes show a peak in XRD which is assigned to the aliphatic acid metal salt.

The crystalline polymer composition according to the present invention finds broad applications as resin parts inclusive of films, sheets, and fibers as automobile parts, such as bumpers, dashboards, and control panels; resin parts of appliances, such as refrigerators, washing machines, and vacuum cleaners; domestic utensils, such as dishes, buckets, and bath room goods; connectors; toys; medical articles, such as infusion bags, syringes, catheters, and tubes; constructing materials, such as wall materials, flooring, window frames, and wall papers; wire coating materials; agricultural materials, such as greenhouses and tunnels; and food packaging materials, such as wrap films and trays.

The present invention will now be illustrated in greater detail with reference to Examples and Comparative Examples, but it should be understood that the present is not construed as being limited thereto. Unless otherwise noted, all the parts are given by weight.

### EXAMPLES 1-1 TO 1-4 AND COMPARATIVE EXAMPLES 1-1 TO 1-6

### Preparation of nucleating agent or nucleating agent composition:

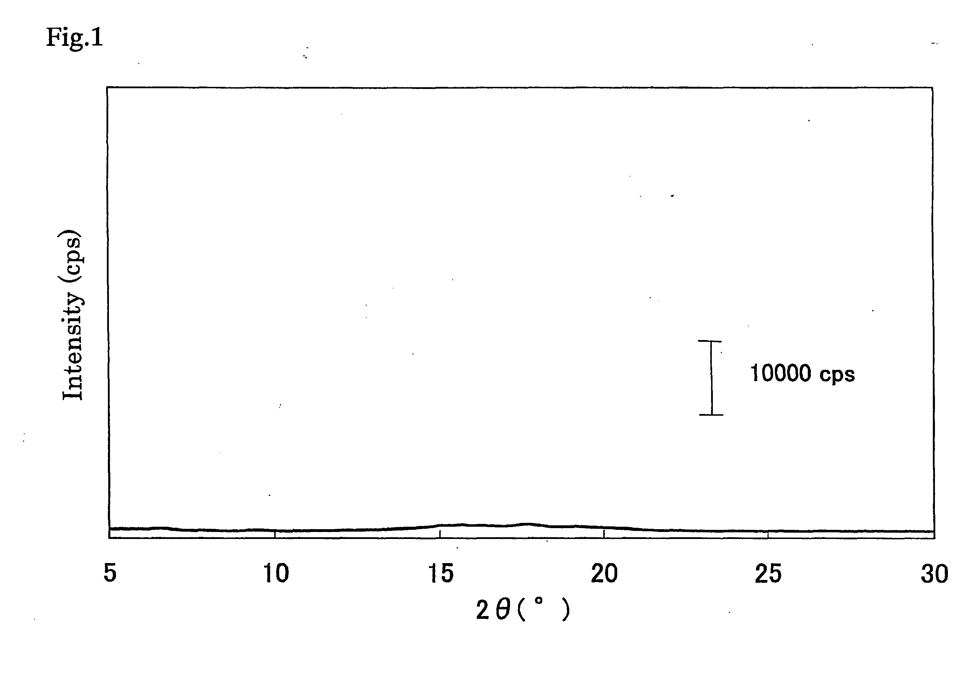

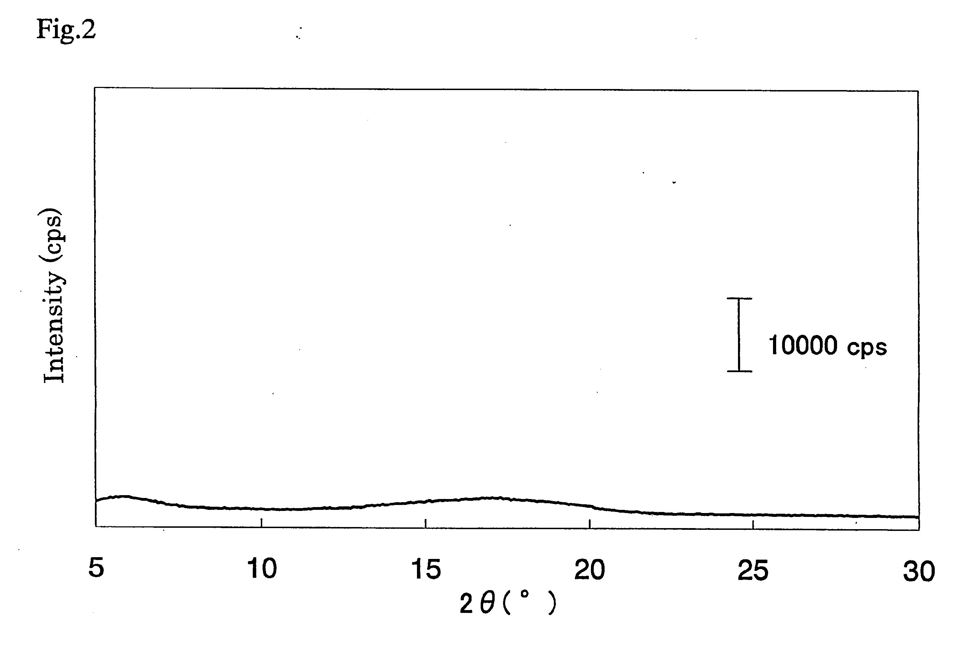

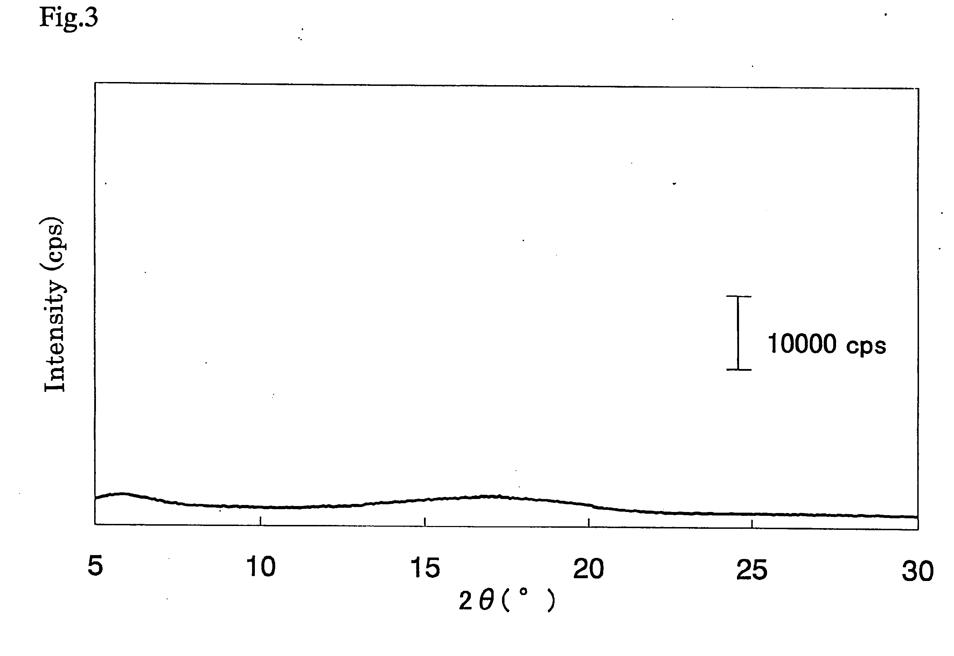

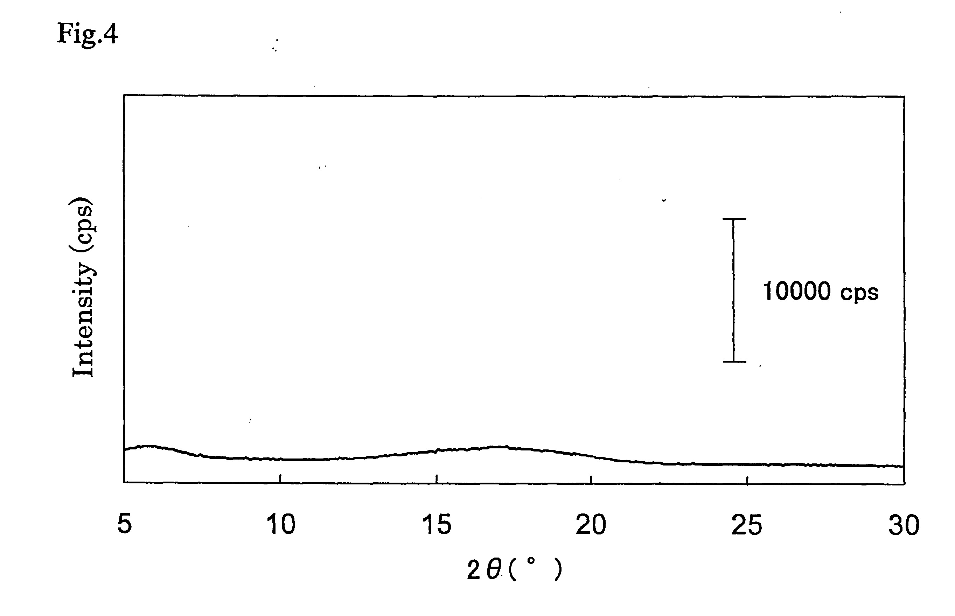

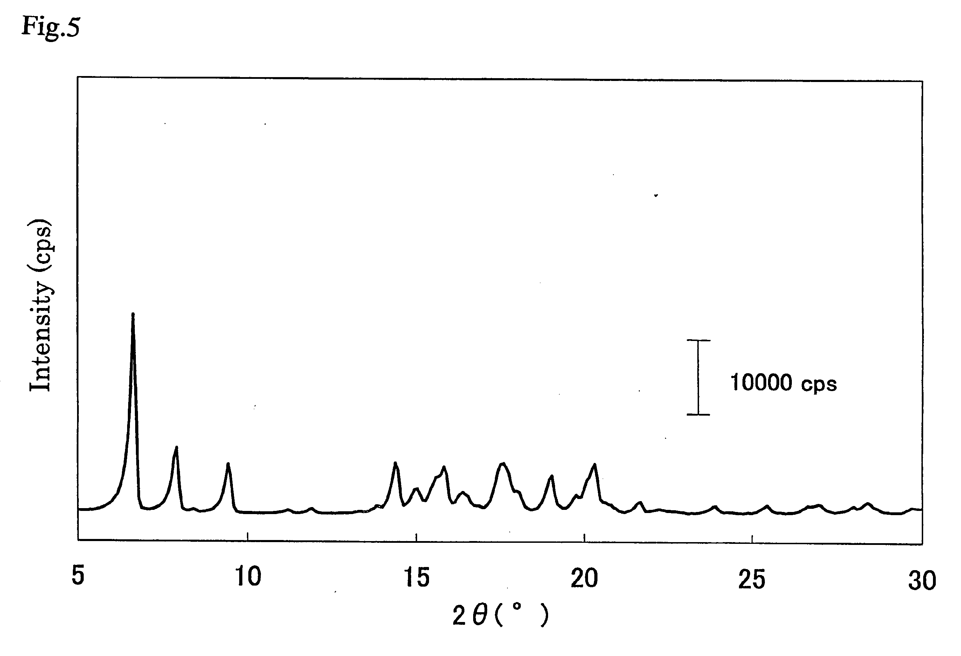

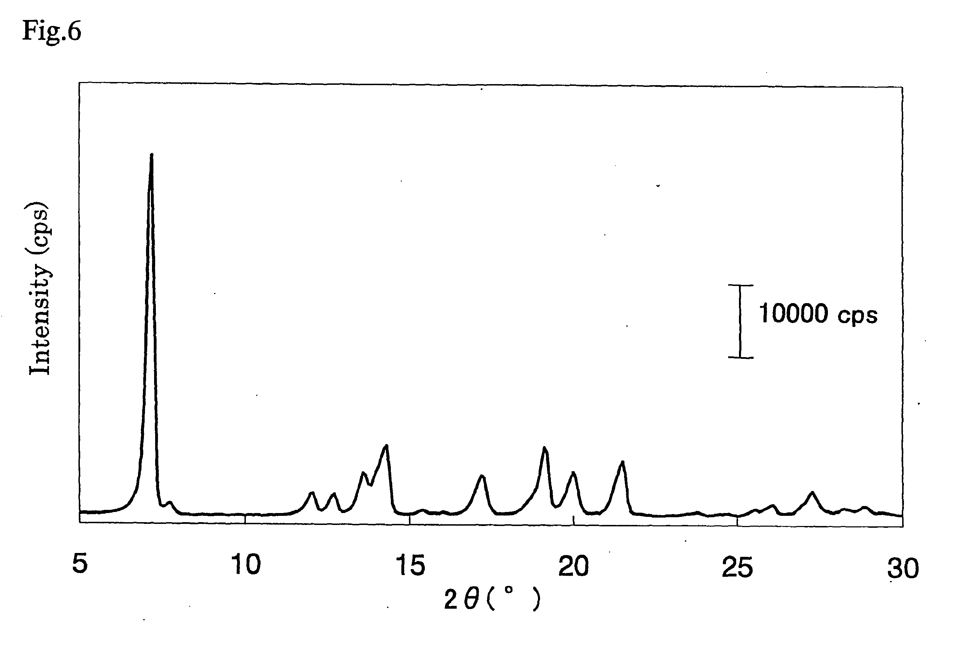

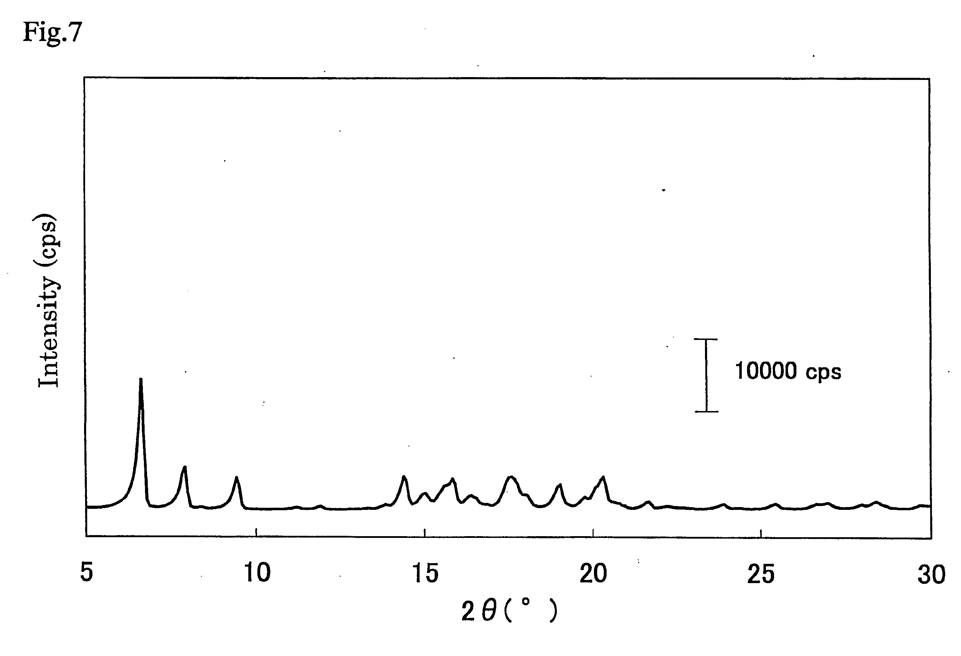

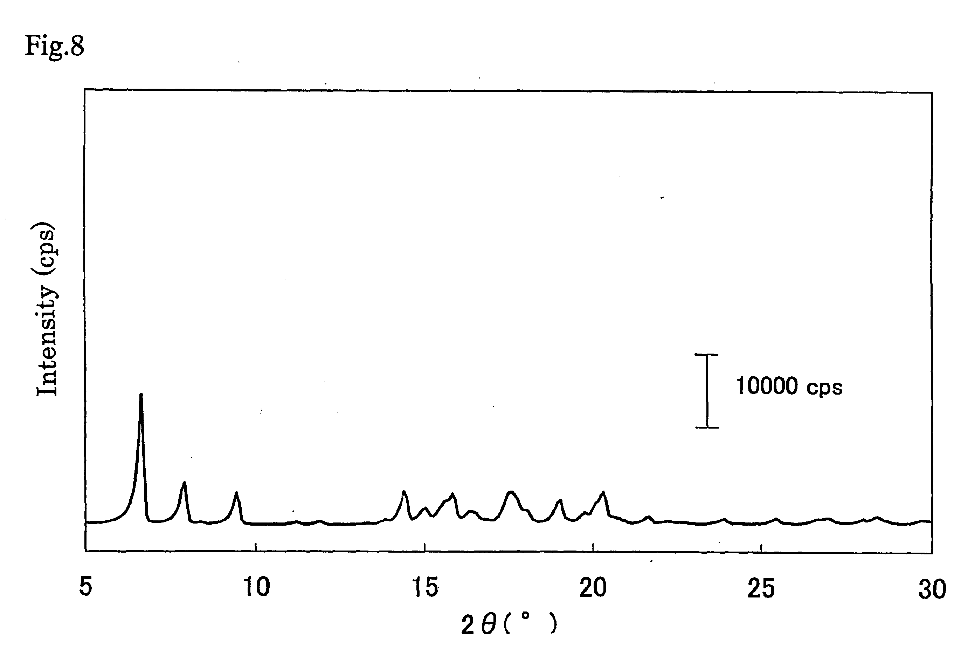

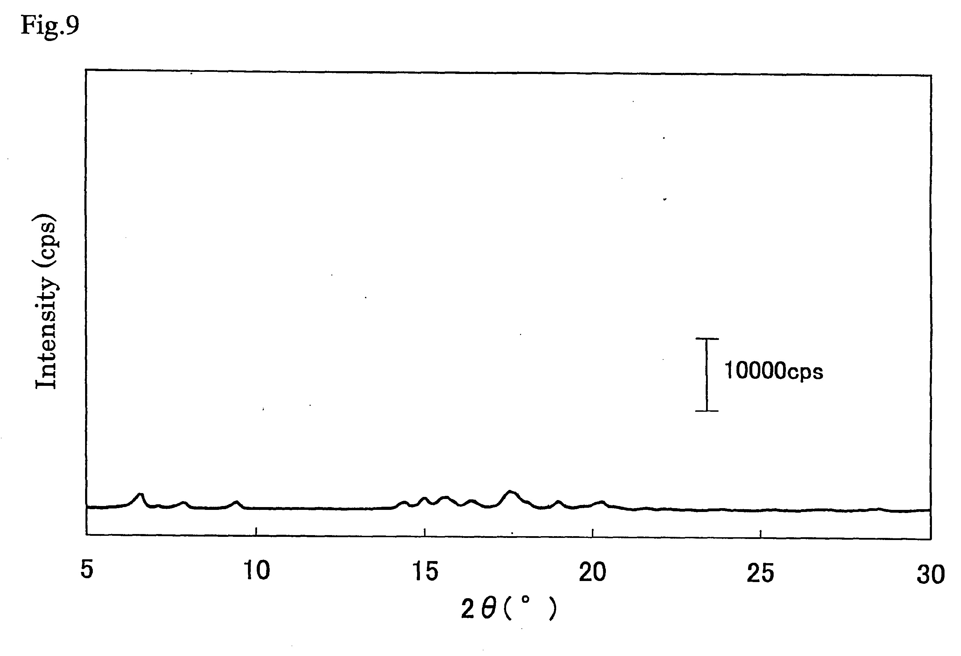

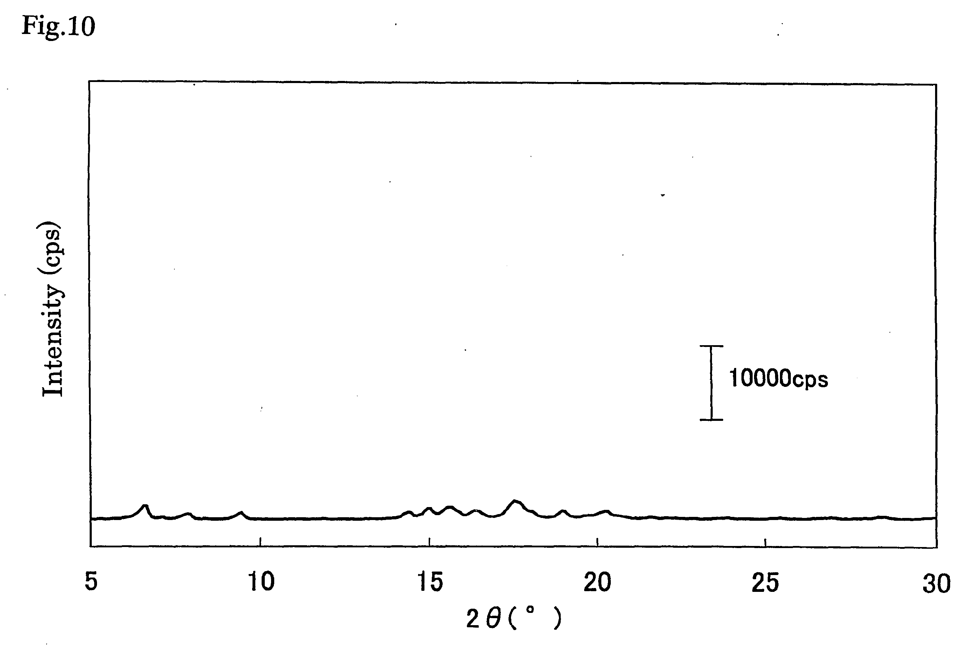

The compound or compounds shown in Table 1 below was/were pulverized in the apparatus shown in Table 1 for a pulverizing time shown to prepare a nucleating agent (Examples 1-1 to 1-3 and Comparative Examples 1-1 to 1-6) or a nucleating agent composition (Example 1-4). The average particle size D50 of the resulting nucleating agent or nucleating agent composition was measured on a dispersion of a sample power in a mixture of water and a surface active agent Adekacol EC-4500 (available from Asahi Denka Co., Ltd.) with a laser diffraction particle size analyzer SALD-2100 (available from Shimadzu Corp.). The nucleating agent or nucleating agent composition was analyzed by XRD using a Cu-Kα source under conditions of 50 kV and 100 mA. The results obtained are shown in Table 1, and the XRD patterns are shown in Figs. 1 through 10.

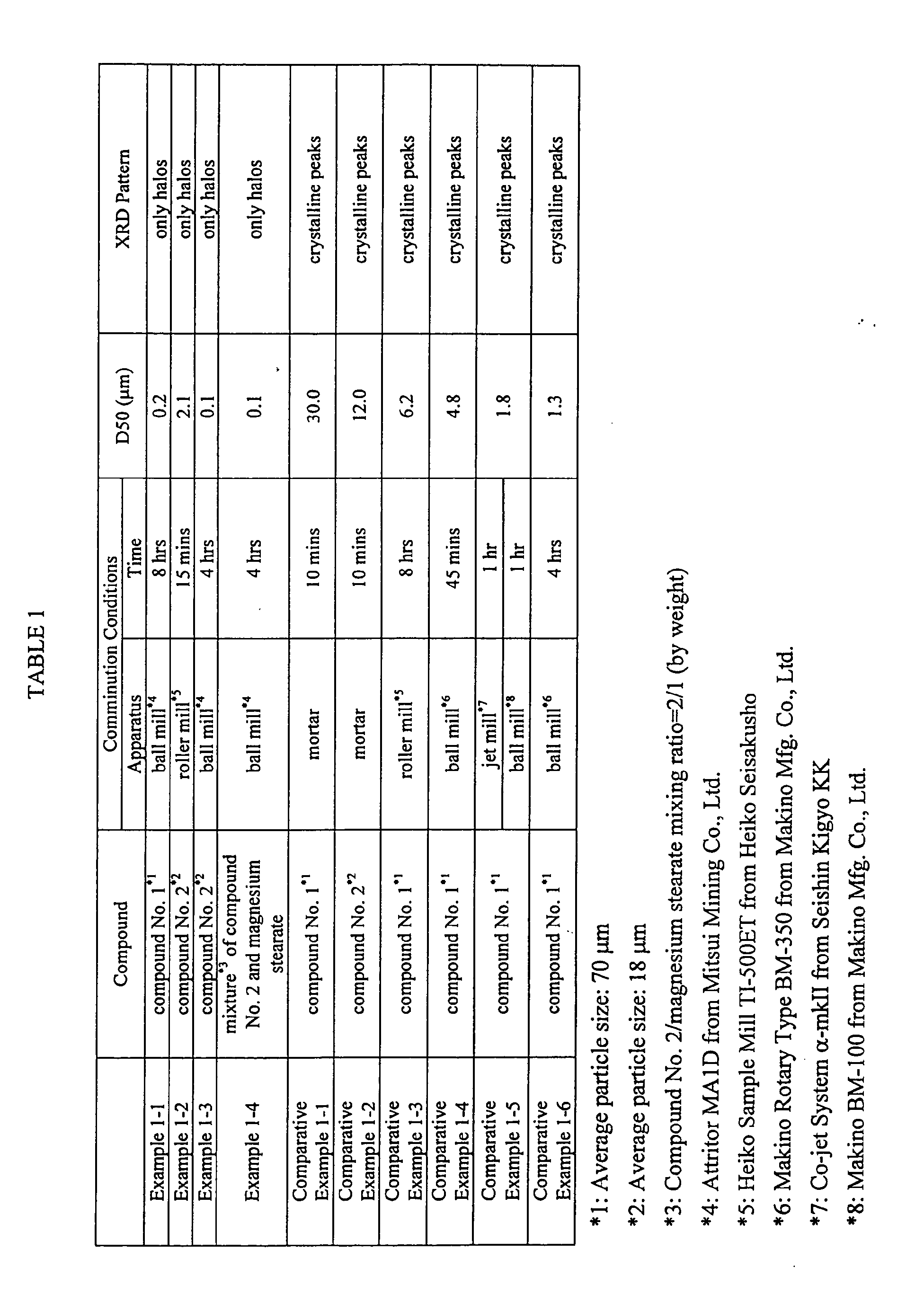

### EXAMPLES 2-1 TO 2-4 AND COMPARATIVE EXAMPLES 2-1 TO 2-6

### Preparation of crystalline polymer composition:

A hundred parts of polypropylene having a weight average molecular weight of 456,000, 0.05 part of calcium stearate, 0.1 part of tetrakis[methyl 3-(3,5-di-tert-butyl-4-hydroxyphenyl)propionate]methane, and 0.1 part of the nucleating agent (or nucleating agent composition) shown in Table 2 below were blended in a Henschel mixer to obtain a crystalline polymer composition.

The resulting crystalline polymer composition was extruded at 250°C and pelletized. The pellets were injection molded at 230°C to prepare a sheet specimen. The haze and the flexural modulus (MPa) of the specimen were measured in accordance with ASTM D-1003-61 and D-790, respectively. The results obtained are shown in Table 2.

**TABLE 2**

| | Nucleating Agent (or Composition) | Haze | Flexural Modulus (MPa) |
|---|---|---|---|
| Example 2-1 | Example 1-1 | 14 | 1920 |
| Example 2-2 | Example 1-2 | 12 | 1840 |
| Example 2-3 | Example 1-3 | 11 | 1870 |
| Example 2-4 | Example 1-4 | 9.4 | 1880 |
| Comparative Example 2-1 | Comparative Example 1-1 | 24 | 1700 |
| Comparative Example 2-2 | Comparative Example 1-2 | 18 | 1650 |
| Comparative Example 2-3 | Comparative Example 1-3 | 22 | 1710 |
| Comparative Example 2-4 | Comparative Example 1-4 | 22 | 1730 |
| Comparative Example 2-5 | Comparative Example 1-5 | 20 | 1780 |
| Comparative Example 2-6 | Comparative Example 1-6 | 19 | 1790 |

As is apparent from the results in Table 2, the crystalline polymer compositions containing the nucleating agent or nucleating agent composition according to the present invention have low haze indicative of high transparency and a high flexural modulus indicative of excellent mechanical strength. The crystalline polymer composition of Example 2-4, which contained a nucleating agent composition containing an aliphatic acid metal salt, was particularly excellent in transparency. The crystalline polymer compositions of Comparative Examples 2-1 and 2-2, which contained a nucleating agent which has an average particle size exceeding 10 µm and shows crystalline peaks in XRD, were inferior in transparency and mechanical strength to the compositions of Examples 2-1 to 2-4. The crystalline polymer compositions of Comparative Examples 2-3 to 2-6, which contained a nucleating agent having an average particle size of 10 µm or smaller but showing crystalline peaks in XRD, exhibited improvement in mechanical strength over those of Comparative Examples 2-1 and 2-2 but were still inferior to those of Examples 2-1 to 2-4.

The nucleating agent or nucleating agent composition of the present invention, when incorporated into a crystalline polymer, provides a crystalline polymer composition excellent in transparency and mechanical strength.

## Claims

1. A nucleating agent which comprises a compound represented by formula (I): 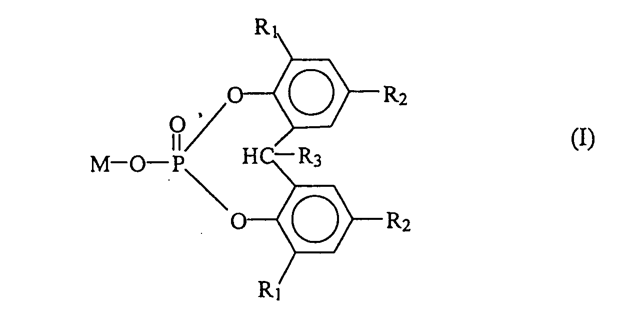 wherein R₁ and R₂ each independently represent an alkyl group having 1 to 9 carbon
atoms; R₃ represents a hydrogen atom or an alkyl group having 1 to 4 carbon atoms; and
M represents an alkali metal, has an average particle size of 10 µm or smaller, and shows substantially no crystalline peaks in X-ray diffractometry.

2. A nucleating agent according to claim 1, which has an average particle size of 5 µm or smaller.

3. A nucleating agent according to claim 1, which has an average particle size of 0.5 µm or smaller.

4. A nucleating agent composition comprising the nucleating agent according to any one of claims 1 to 3 and 0.01 to 10 times the weight of an aliphatic organic acid metal salt.

5. A crystalline polymer composition containing the nucleating agent according to any one of claims 1 to 3 or the nucleating agent composition according to claim 4.

6. A crystalline polymer composition according to claim 5, wherein the crystalline polymer is an olefin polymer.

7. A crystalline polymer composition according to claim 6, wherein the olefin polymer is a polypropylene resin.
